# EUROPEAN PATENT APPLICATION

(11) **EP 4 726 865 A1**
(43) Date of publication of application: **15.04.2026**
(21) Application number: 24205476.5
(22) Date of filing: 09.10.2024
(51) Int. Cl.: H01M 50/103, H01M 50/124, H01M 50/134, H01M 50/143, H01M 50/342

(54) **BATTERY ARRANGEMENT AND METHOD OF MANUFACTURING THE BATTERY ARRANGEMENT**

(71) Applicant: ABB Schweiz AG, 5400 Baden (CH)
(72) Inventor: HE, Minglong, 4310 Rheinfelden (CH); TROENDLE, Pirmin, 79761 Waldshut-Tiengen (DE); LANDMANN, Daniel, 4125 Riehen (CH)
(74) Representative: Sykora & König Patentanwälte PartG mbB

(57) **Abstract**

A battery arrangement and method for its manufacturing, wherein the battery arrangement comprises a first battery cell having a first casing and a planar stiffening element which is externally surface-mounted to a first stiffening section of the first casing in such a way that the planar stiffening element completely covers the first stiffening section. The planar stiffening element is formed and surface-mounted to the first non-contact section such that it increases the stiffness of the first stiffening section such that when a pressure within the first battery cell increases beyond a predefined first threshold pressure, the first casing breaks open first in a predetermined first non-contact section of the first casing, which is different from the first stiffening section, in order to allow the pressure within the first battery cell to be decreased.

## Description

### FIELD OF THE INVENTION

The invention relates to the field of battery arrangements and their safety. In particular, the invention relates to a battery arrangement, and to a method of manufacturing a battery arrangement.

### BACKGROUND OF THE INVENTION

Within battery cells internal gas accumulation may occur due to unwanted, irreversible side-reactions and it is a marker for battery aging and/or battery abuse. It is observed for many different cell chemistries such as Graphite ∥ Nickel-Manganese-Cobalt (NMC), Graphite ∥ Lithium-Ferrophosphate (LFP), and Lithium-Titanium-Oxide (LTO) ∥ NMC cells. To handle this uncontrolled gas accumulation safely, battery manufacturers fit burst discs to their cell housings. This feature allows the relief of pressure at a critical point, i.e., when the pressure reaches above a pressure threshold, where without intervention battery cell explosion may occur. Potentially the released, highly pressurized, flammable gas ignites and creates a flash or vent jet with temperatures up to 1300 °C melting every common construction material in its surrounding and/or affecting surrounding battery cells. Additionally, when a malfunctioning cell enters thermal runaway, temperature drastically increases due to the thermal decomposition of its active material. Thermal runaway of single cells can lead to runaway propagation to neighboring battery cells especially in tight spaced battery modules/packs.

Thus, the position and arrangement of the burst disc (or other suitable type of pressure relief valve) determines the direction of the above-described vent jet of hot, active material. One solution to the above problem would be to select the position and arrangement of the burst disc such that a potential vent jet is directed where no neighboring battery cells, or surrounding structures are arranged. However, this solution would have to be implemented by the battery cell manufacturer, who, however, cannot determine in advance where neighboring battery cells or any surrounding structures (e.g. of a product powered by the battery cells) will be arranged by a battery cell integrator. Rather, the battery cell integrator must decide where and how the battery cells are arranged depending on the individual product in which the battery cells are to be used. For example, the integrator decides which battery cells in a battery stack are arranged at the beginning and end of the battery stack, and ,therefore, only have with one neighboring battery cell, and which are arranged within the battery stack and therefore have two neighboring battery cells each. In other words, the exact arrangement of the battery cells is only determined by the integrator and cannot be generally determined in advance. Therefore, when manufacturing the battery cells, a battery cell manufacturer cannot arrange the burst discs in the housing of the battery cells in such a way that they are favorably positioned for every conceivable arrangement of the battery cells by the battery cell integrator.

Therefore, reducing the risk of damaging neighboring battery cells or other surrounding structures would contribute to the safety and durability of battery cells and stacks of battery cells.

### DESCRIPTION OF THE INVENTION

It is an objective of the present invention to provide a battery arrangement and a method for manufacturing a battery arrangement which contributes to that the battery arrangement and any structures surrounding it is very safe and durable.

These objectives are achieved by the subject-matter of the independent claims. Further exemplary embodiments are evident from the dependent claims and the following description.

The terms "first", "second", "third" and "further" are used in this description for naming and differentiation purposes only. They are in no way intended to imply a chronological or spatial order or a quantity of the corresponding entities.

An aspect of the invention refers to a battery arrangement comprising a first battery cell having a first casing, and a planar stiffening element which is externally surface-mounted to a first stiffening section of the first casing in such a way that the planar stiffening element completely covers the first stiffening section. The planar stiffening element is formed and surface-mounted to the first stiffening section such that it increases the stiffness, e.g., the structural stiffness, of the first stiffening section such that when a pressure within the first battery cell increases beyond a predefined first threshold pressure, the first casing breaks open first in a predetermined first non-contact section of the first casing, which is different from the first stiffening section, in order to allow the pressure within the first battery cell to be decreased.

For example, the battery arrangement may comprise only one battery cell, or a plurality of batter cells. For example, the battery arrangement may comprise a first battery cell, a first and a second battery cell, or a first, a second and further battery cells. Each battery cell has a casing, which may also be referred to as a housing, covering, corpus or case. The casing may have various geometrical shapes such as that of a cylinder, cube, cuboid or other suitable polyhedron. The casing may be of any suitable construction material or mix of materials such as steel, aluminum, titanium metals, polymers, and composite materials such as fiber reinforced polymers.

For example, the planar stiffening element may be a planar element, the surface of which can be adapted to the surface of the first stiffening section. In particular, the planar stiffening element can be surface-mounted to the first stiffening section, such that opposing surfaces of the first stiffening section and the planar stiffening element are in physical contact with each other, i.e. touch each other. The external surface-mounting of the planar stiffening element on the first stiffening section, attaches the planar stiffening element planarly, in the sense of extending along the external surface of the first stiffening section. In other words, the planar stiffening element is attached to the outwardly facing surface of the first stiffening section in such a way that the surface of the planar stiffening element extends essentially parallel to or conforms to the surface of the first stiffening section and touches it.

The entire surface, or at least a certain percentage of the planar stiffening element may be non-removably attached to the surface of the section of the first casing. In other words, all or part of the surface of the planar stiffening element may be connected to the surface of the first casing by suitable methods of attachment which are discussed below.

In general, the purpose of the planar stiffening element is to change the deformation properties of the first stiffening section, e.g., by increasing the stiffness of or stiffening the first casing in the first stiffening section. The inventors have discovered in their research that after stiffening certain areas or sections of the first casing by means of the planar stiffening element, the reduced deformability in these certain areas leads to a higher stress or load on the first casing material in other areas or sections when a pressure inside the first battery cell increases. In particular, by making the first stiffening section of the first casing stiffer than the remainder of the first casing the planar stiffening element introduces an anisotropy or inhomogeneity of the deformation characteristics of the first casing. Due to this anisotropy or inhomogeneity the stress on the casing material is increased in at least the predefined first non-contact section of the casing such that the first non-contact section, or at least a subsection of the first non-contact section, represents at least one weak spot of the first casing which will break or rupture first in case of an overpressure within the first battery cell. The term "weak spot" as used herein comprises small spot-like areas as well as larger areas or sections of the first battery cell casing. In a weak spot the stress or load of the material is higher than in other areas of the casing, such that the casing may break or rupture earlier in the weak spot than in the other areas. In other words, the stiffening of in one or more predefined areas alters the stress distribution on the casing's surface in a way that the structure of the primary construction of the casing collapses differently, i.e., in a different manner and at different locations than without the stiffening. Thus, the original structure of the casing is altered in a way that allows a redistribution of stresses in a way that provokes a different failure mode of the original casing structure. Moreover, the one or more weak spots may be predicted, i.e., they can be predetermined, e.g., by calculation, computation, simulations, or empirically. For example, knowing the material and material properties and, optionally, the geometrical shape of the first casing and the planar stiffening element the material stress or load can be calculated, computed or simulated. The at least one weak spot or the first non-contact section and the first stiffening section may be adjacent or at least close to each other, e.g., on a same side-wall of the first casing, or on the side-wall and an edge of the side-wall, or at a distance from each other, e.g., on two different side-walls of the first casing.

In this way, the occurrence and location of weak spots may be determined as dependent on the shape, configuration and/or arrangement of the planar stiffening element. Alternatively or additionally, the occurrence and location of weak spots may be empirically determined, e.g. through series of experiments.

As a result, if a certain pressure is exceeded, the first casing will break or rupture first in the first non-contact section. Moreover, the one or more weak spots can be created such that the first casing breaks at these one or more weak spots in the first non-contact section even before any pressure relief valve foreseen during manufacture, such as a burst disc, opens and releases the pressure.

Thus, the material of the planar stiffening element and its 2D-shape, i.e. the shape of its surface, may be suitable to stiffen the first stiffening section of the first casing, and to create the one or more predefined weak spots of the first casing in the first non-contact section.

Advantageously, the invention allows a battery cell integrator to predetermine or retroactively modify or change the direction of any potentially occurring vent jet. Altering the direction of the vent jet retroactively, i.e., after manufacture of the battery cells, e.g. while planning or performing the integration of the battery cells, and allowing a controlled ejection of hot active material, is a very favorable design feature that allows battery cell integrators to adjust the venting behavior of single battery cells in favor of increased overall battery pack safety.

According to one embodiment, the first stiffening section and the first non-contact section are arranged next to each other.

For example, the above discussed at least one weak spot may be in a border zone where the first stiffening section borders to the first non-contact section, i.e., at a transition or transition area of a stiffer/stiffened first stiffening section to the less stiff/non-stiffened first non-contact section. In particular, this may be the case when the first stiffening section is arranged directly next to, in particular touching, the first non-contact section.

Thus, advantageously this allows to easily and recognizably define the first non-contact section.

According to another embodiment, the casing of the first battery cell comprises a pressure relief valve for releasing the pressure within the first battery cell when the pressure increases beyond a predefined second threshold pressure, and the planar stiffening element is configured and surface-mounted to the first stiffening section such that the first threshold pressure is lower than the second threshold pressure.

For example, the pressure relief valve may open before the first casing breaks or ruptures in case of the overpressure inside the first battery cell, allowing the pressure and, potentially any hot active material, to escape through the resulting opening of the pressure relief valve, thereby reducing the pressure in the first battery cell. For example, the pressure relief valve may be a burst disc located in the first casing but made of a material whose pressure resistance is less than that of the first casing material, e.g. because it is thinner or of a weaker material. Thus, the burst disc may rupture or break before the first casing in case of the overpressure inside the first battery cell. As already indicated, the pressure relief valve and, in particular, the burst disc may prevent the first battery cell from exploding. In principle, any known and suitable type of pressure relief valves other than burst discs may be used, e.g. spring-loaded pressure valves. As discussed above, such pressure relief valves may eject a vent jet of hot active material in direction to a neighboring battery cell or other structure and eventually damage it. The above embodiment overcomes this potential disadvantage, by surface-mounting and forming or configuring the planar stiffening element such that at the at least one created weak spot in the first non-contact section breaks first, i.e., even before the pressure relief valve opens or breaks.

Advantageously, this allows a battery cell integrator to retroactively change the direction of a potentially occurring vent jet, despite the presence of a pressure relief valve and, e.g., using a conventional battery cell.

According to a further embodiment, the pressure relief valve is arranged in the first stiffening section and the planar stiffening element is surface-mounted to first stiffening section such that it blocks the pressure relief valve.

For example, the planar stiffening element may be attached to the first battery cell such that it covers the pressure relief valve, thereby blocking it and preventing it from opening or at least delaying its opening in case of the overpressure inside the battery cell. Thus, the first stiffening section may contain the pressure relief valve, i.e., the first stiffening section may be chosen such that the pressure relief valve is arranged in the first stiffening section and, when surface-mounted to the first stiffening section, the planar stiffening element covers the pressure relief valve and may block it.

Advantageously, this allows to ensure that any hot active material is released in the first non-contact section first, even though the battery cell has the pressure relieve valve.

According to a further embodiment, the surface-mounted planar stiffening element is attached to the first stiffening section by at least one of gluing, bonding, welding, brazing, fusing or vulcanizing.

In general, the planar stiffening element may be surface-mounted to the first stiffening section of the first casing by attaching it to the first stiffening section in any manner that enables modifying and, in particular, increasing the stiffness of the first stiffening section. For example, the planar stiffening element may be surface-mounted to the first stiffening section of the first casing by welding, gluing, brazing, fusing or vulcanizing. Riveting, spot welding or screwing are further possible kinds of attachment. Combinations of any the above manners of attaching the planar stiffening element to the first stiffening section are also possible.

Advantageously, this allows to retroactively attach the planar stiffening element to the first stiffening section in an easy but effective manner.

According to a further embodiment, the surface-mounted planar stiffening element is attached to the first stiffening section over at least 50%, at least 70%, at least 80%, at least 90%, or 100% of the complete first stiffening section and the complete planar stiffening element facing the surface of the first stiffening section.

For example, in order to modify or increase the stiffness of the first on-contact section it may not be necessary to create a non-removable connection between all of the surface of the planar stiffening element and all of the surface of the first stiffening section. It may in fact be sufficient to create such a non-removable connection, e.g., by one of the above discussed methods, only between a part of both surfaces. Thus, only 50% of the surface of the planar stiffening element may be non-removably connected to the surface of the first stiffening section, although the planar stiffening element covers all of the first stiffening section. Preferably at least 70%, more preferably at least 80%, even more preferably at least 90% and most preferably 100% of both surfaces are non-removably connected.

Advantageously, the production effort may be reduced by creating a non-removable connection between only parts of the planar stiffening element and the first stiffening section.

According to a further embodiment the first stiffening section covers one of 5%, 8%, 15%, 25%, 33%, 50%, 75% or 90% of a net surface of the first casing.

For example, the first stiffening section may correspond to only a part of the net surface of the first casing. In the example of a battery cell having a cuboid shape, the first stiffening section may correspond to one of the side-walls of the cuboid or a sub-section of one of its side-walls. In other examples of a battery cell having a cuboid shape, the first stiffening section may correspond to two, three or more side-walls of the battery cell. For example, in a stack of battery cells with at least two neighboring cuboid battery cells, where one of the walls of one battery cell touches a wall of the other, the planar stiffening element may be at least partially attached to three of the remaining five side-walls. The "net surface" may mean in this context the overall surface of the corresponding casing.

Advantageously, this may reduce the amount of effort and material required.

According to a further embodiment, the planar stiffening element increases the stiffness of the first stiffening section by comprising or consisting of a material having Young's modulus being the same or higher than the Young's modulus of the material of the first casing, and/or a material having a Young's modulus of 50 GPa to 400 GPa, e.g., 60 GPa to 300 GPa, e.g., 100 GPa to 250 GPa, and/or a material of one of steel, aluminum, titanium metals, polymers, fiber reinforced polymers, or other composite materials.

As discussed above, for example, the material of the planar stiffening element may be as stiff or stiffer than the material of the first casing and, in particular, than the material of the first stiffening section. For example, the planar stiffening element may be of a material or material mix having an equal or higher Young's modulus than the material of the first casing and in particular of the material of the first stiffening section. The material of the planar stiffening element may, e.g., be the same as the material of the battery casing in the first stiffening section or a different one. For example, the material of the planar stiffening element may comprise or consist of steel, aluminum, carbon, titanium (metals), polymers, and composite materials such as fiber reinforced polymers, or another material suitable for stiffening the casing, or any combination of and/or alloy comprising at least one of these materials. For example, the material of the planar stiffening element may be an aluminum alloy, aluminum, titanium, or steel. In particular, the material of the planar stiffening element may have a Young's modulus of around 70 GPa, 72 Gpa, 120 GPa, or 210 GPa.

Advantageously, this provides an easy and reliable manner to increase the stiffness of the first stiffening section.

According to a further embodiment the planar stiffening element increases the stiffness of the first stiffening section by having a thickness of one of 0.1 mm to 50 mm, e.g., 0.5 mm to 10 mm, e.g., 1 mm to 3 mm or of one of 0.1 times to 10 times, e.g., 0.5 times to 4 times, e.g., 1 times to 3 times the thickness of the first casing in the first stiffening section.

For example, the planar stiffening element may have a thickness suitable for stiffening the first casing and in part the first stiffening section. The thickness of the planar stiffening element may be thicker, equal or thinner than the thickness of the first casing, and in particular of the thickness the first stiffening section. For example, planar stiffening element may have a thickness ranging from 0.1 mm to 2 mm. In particular, the thickness of the planar stiffening element may be 1.5 mm. However, depending on the internal structure of the planar stiffening element, the planar stiffening element may have a thickness of 50 mm or even above, e.g. when the planar stiffening element has a hollow structure (see below). When compared to the thickness of the first casing, the thickness of the planar stiffening element may be 0.2 times, preferably 2 times, and most preferably 3 times of the thickness of the first casing and, in particular, of the thickness the first stiffening section. Again, depending on the internal structure of the planar stiffening element, the planar stiffening element may have a thickness of up to 100 times or more of the thickness of the first casing and, in particular, of the thickness the first stiffening section, e.g. when the planar stiffening element has a hollow structure (see below).

Advantageously, by modifying the thickness of the planar stiffening element the stiffness of the first stiffening section can be adjusted accurately.

According to a further embodiment the planar stiffening element increases the stiffness of the first stiffening section by having a surface shape of one of a rectangle, a circle, an oval, a hexagon or any shape that allows coverage of the surface of the first stiffening section.

For example, the planar stiffening element or more particularly the shape of its surface may be adapted to increase the stiffness of the first stiffening section compared to the first non-contact section. In particular, the shape of the surface of the planar stiffening element may be adapted or configured to create the above discussed at least one weak spot at a predetermined location or subsection of the first non-contact section. For example, the planar stiffening element may be a plate, sheet or disc with a rectangular, in particular square, circular, oval or any other suitable shape, e.g., determined by calculation or computation, simulation or empirically. In particular, the surface-shape of the planar stiffening element follow the shape of the first stiffening section, e.g., be a square or rectangle. Further, the planar stiffening may have a non-hollow structure, i.e., be massive or filled, or have a hollow structure, e.g., have a T-profile or C-profile, or have a grid or lattice structure.

Advantageously, by modifying the shape and/or structure of the planar stiffening element the position of the first non-contact section and, in particular, the at least one weak spot can be predetermined accurately.

According to a further embodiment the first battery cell is cuboidal and has six side-walls, wherein the first stiffening section is a first one of the six side-walls, and the first non-contact section is arranged on an edge between the first one and a further one of the six sidewalls or on the further one of the six side-walls, wherein the further one of the six side-walls is different from the first one of the six side-walls.

For example, the first battery cell may be a cuboid, wherein herein cuboid includes a cube having identical length of its edges, i.e., it may have a rectangular or square cross-section. Thus, cuboid herein includes a cube having identical length of its sides. In any case, the first casing of the cuboid-shaped first battery cell has six side-walls, i.e., a first, second, third, fourth, fifth and sixth side-wall and each of these side-walls corresponds to one of the side-walls of the cuboid. The first stiffening section may in this case correspond to the first side-wall and the first non-contact section may be arranged on an edge between the first side-wall and a further side-wall or on any of the further side-walls. The planar stiffening element may be surface-mounted to the first stiffening portion by attaching at least a portion of a surface of the planar stiffening element to a facing surface of the first stiffening portion (e.g., using one of the attachment methods described above).

Advantageously, the cuboid shape makes it easier to arrange several battery cells in a stack of battery cells.

According to a further embodiment, the battery arrangement further comprises a second battery cell having a second casing and wherein a first contact section of the first casing, which is different from the first stiffening section and the first non-contact section, touches a second contact section of the second casing, which is different from a second non-contact section and a predetermined second non-contact section of the second casing. The planar stiffening element is externally surface-mounted to the second stiffening section, in such a way that the planar stiffening element completely covers the second stiffening section, and the planar stiffening element is formed and surface-mounted to the second stiffening section such that it increases the stiffness of the second stiffening such that when a pressure within the second battery cell increases beyond the predefined first threshold pressure, the first casing breaks open first in the predetermined second non-contact section, in order to allow the pressure within the second battery cell to be decreased.

Thus, mutatis mutandis, the planar stiffening element may increase the stiffness of the second stiffening section in the same manner as it increases the stiffness of the first stiffening section.

For example, the first and second battery cell may be in physical contact, i.e. touch each other, at their respective contact section, i.e., first and second contact section, respectively. For example, they may be arranged in a stack such that the first contact section touches the second contact section. The planar stiffening element may be surface-mounted to the first and the second battery cell, in particular to the first stiffening section and the second stiffening section, increasing the respective stiffness of each of the first and second stiffening sections in the same manner as described above in the context of the first batter cell and the first stiffening and first non-contact sections. Thus, in case of the overpressure in any of the first and second battery cell, the respective battery cell casing will break open in the first or second non-contact section, respectively, and release the pressure from within the respective battery cell, whereby material contained within the respective battery cell may be released or ejected.

In case of cuboid-shaped battery cells, the second stiffening section may be a first side-wall of the six side-walls of the second casing. The second contact section may then be a second side-wall of the six side-walls of the second casing, which is different from the first side-wall. The second non-contact section may then be arranged on an edge between the first side-wall and a further side-wall, or on the further side-wall of the cuboid second casing, wherein the further side-wall is different from the first and second side-wall.

In case of a second battery cell, the planar stiffening element may be surface-mounted to the first stiffening section only or to the first and second stiffening section. Optionally, when being surface-mounted to the first and the second stiffening section the planar stiffening element may cover only the first stiffening section, or the first stiffening section and the second stiffening section.

In one embodiment, the battery arrangement may form and be referred to as a stack of battery cells. The stack of battery cells may also be referred to as a battery pack or battery string.

In further embodiments, the battery arrangement may comprise more than two battery cells, i.e., it may comprise a first battery cell, a second battery cell and further battery cells. For example, three, four, five, or more battery cells may be arranged in a row and opposite casing sections of neighboring battery cells are in physical contact, i.e. touch each other. In general, in case of more than two battery cells, depending on the position of the respective battery cell in the battery arrangement, each battery cell may have more than one contact section. All of the above discussed principles discussed in context of the case of having a first and a second battery cell apply to battery cells of the battery arrangement having a first, second and further battery cells analogously.

Advantageously, by using more than one battery cell, higher currents and/or voltages can be provided.

The skilled person understands that any combination of two or more of the above-mentioned embodiments is possible and within the scope of the invention. In particular, one or more of the properties of the first and/or second battery cell, the first and/or second casing, the first and/or second stiffening section, the first and/or second non-contact section, or the planar stiffening element may simultaneously be fulfilled.

A further aspect of the invention refers to a method of manufacturing a battery arrangement comprising the steps of providing a first battery cell having a first casing, surface-mounting a planar stiffening element externally to a first stiffening section of the first casing such that the planar stiffening element completely covers the first stiffening section. The planar stiffening element is formed and surface-mounted to the first stiffening section such that it increases the stiffness, e.g. the structural stiffness, of the first stiffening section such that when a pressure within the first battery cell increases beyond a predefined first threshold pressure, the first casing breaks open first in a predetermined first non-contact section of the first casing, which is different from the first stiffening section, in order to allow the pressure within the first battery cell to be released.

According to one embodiment, surface-mounting the planar stiffening element externally to the first stiffening section comprises attaching the planar stiffening element externally to the first stiffening section by at least one of gluing, bonding, welding, brazing, fusing or vulcanizing.

According to a further embodiment, the first battery cell is provided together with a second battery cell having a second casing, and the step of surface-mounting the planar stiffening element externally to the first stiffening section further comprises surface-mounting the planar stiffening element externally to a second stiffening section of the second casing. The planar stiffening element is formed and surface-mounted to the second stiffening section such that it increases the stiffness of the second stiffening section such that when a pressure within the second battery cell increases beyond a predefined first threshold pressure, the second casing breaks open first in a predetermined second non-contact section of the second casing, which is different from the second stiffening section, in order to allow the pressure within the second battery cell to be released.

The skilled person understands that any combination of two or more of the above-mentioned method steps is possible and within the scope of the invention.

### BRIEF DESCRIPTION OF THE DRAWINGS

The subject matter of the invention will be explained in more detail in the following text with reference to exemplary embodiments which are illustrated in the attached drawings.
- Fig. 1: shows a conventional battery cell having a burst disc on its upper casing wall;
- Fig. 2: shows the battery cell of Fig. 1 in the event of an increasing pressure within the battery cell;
- Fig. 3: shows the battery cell od Figs. 1 and 2 in the event that the pressure within the battery cell has increased over a threshold pressure such that the burst disc has burst to release pressure;
- Fig. 4: shows an exemplary embodiment of a battery arrangement having a burst disc on its upper casing wall and a planar stiffening element surface-mounted to one of the side-walls of its casing;
- Fig. 5: shows the battery arrangement of Fig. 4 in the event of an increasing pressure within the battery cell;
- Fig. 6: shows the battery arrangement of Figs. 4 and 5 in the event that the pressure within the battery cell has increased over a threshold pressure such that the burst disc has burst to release pressure;
- Fig. 7: shows an exemplary embodiment of a battery arrangement having two battery cells arranged as a stack where the two battery cells touch each other at one of the side-walls (contact section) and a planar stiffening element surface mounted to another one of the side-walls of each battery cell casing (stiffening section);
- Fig. 8: shows an exploded view of the battery arrangements of Fig. 7;
- Fig. 9: shows an exemplary embodiment of a battery arrangement having three battery cells arranged as a stack and planar stiffening elements surface-mounted on several side-walls of the individual battery cells such that the planar stiffening elements surround the battery stack.
- Fig. 10: shows another exemplary embodiment of a battery arrangement having three battery cells with burst discs, and planar stiffening elements surface-mounted on several side-walls of the individual battery cells such that the planar stiffening elements surround the battery stack and cover all burst discs;
- Fig. 11: shows a flow diagram representing a method according to the invention with its method steps.

The reference symbols used in the drawings, and their meanings, are listed in summary form in the list of reference symbols. In principle, identical parts are provided with the same reference symbols in the figures. Hidden edges are represented by dashed lines and hidden sides or elements are identified by reference signs with dashed lines.

### SUMMARY OF THE INVENTION

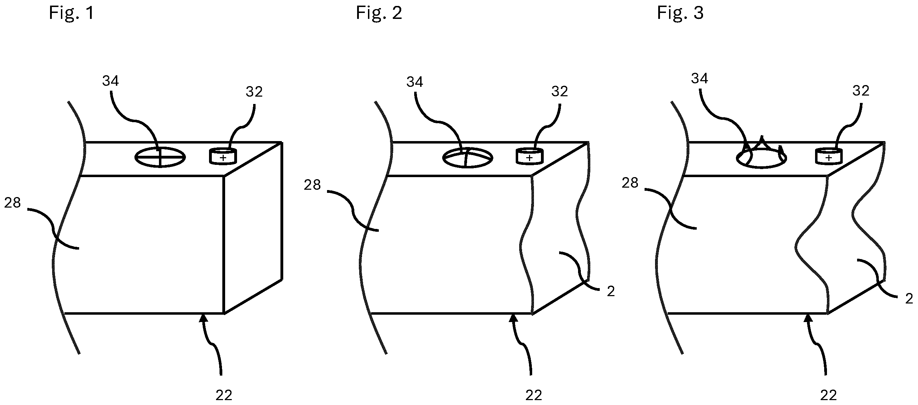

Fig. 1 shows a first battery cell 22, which may be a conventional battery cell and be arranged in a stack of battery cells with further battery cells. The first battery cell 22 comprises a first casing 28 which surrounds and covers the inside of the first battery cell 22, such that the inside of the first battery cell 22 is shielded against the outside. The first battery cell 22 may optionally comprise a first burst disc 34, which has the function of a pressure relief valve. Further, the first battery cell 22 has a first electrode 32 for electrical connection. In this example the first electrode 32 is an anode but may as well be a cathode. The battery cell also has a second electrode with a polarity opposite to that of the first electrode (not shown).

Fig. 2 shows the first battery cell 22 of Fig. 1 in the event of an increasing pressure within, i.e., inside, the first battery cell 22. As discussed in the introductory part, such an increase of pressure may result from unwanted, irreversible side-reactions, such as a thermal runaway. As can be taken from Fig. 2, the increasing pressure may cause the first burst disc 34 to deform and, in particular, bend outwards, which may increase the material stress on the burst disc's 34 material, which may also be referred to as material load. Further, in reaction to the increased pressure a side-wall 2 of the battery cell first casing 28 is deformed, and at least parts of it may be bent inwards. Alternatively or additionally, the parts or all of the side-wall 2 may be bent outwards (not shown). Further alternatively or additionally, side-walls of the first casing 28 other than the side-wall 2 may be deformed by the increasing pressure.

Fig.3 shows the first battery cell 22 of Fig. 1 and 2 in the event of the overpressure within the first battery cell 22, i.e., a pressure within the first battery cell 22 that has increased above a threshold pressure. As can be taken from Fig. 3 the side-wall 2 is even further deformed and the first burst disc 34 has burst or ruptured due to the overpressure. The material of the first burst disc 34 is less pressure resistant than the material of the first casing 28. Thus, the first burst disc 34 bursts first, i.e., before the first casing 28 breaks open or ruptures. Thus, in the first battery cell 22, the first burst disc 34 represents a weak spot. Once the first burst disc 34 has burst, the pressure is released through the opening created by the first burst disc 34. Material contained inside the first battery cell 22 may now be ejected through the opening potential creating a vent jet of hot active material.

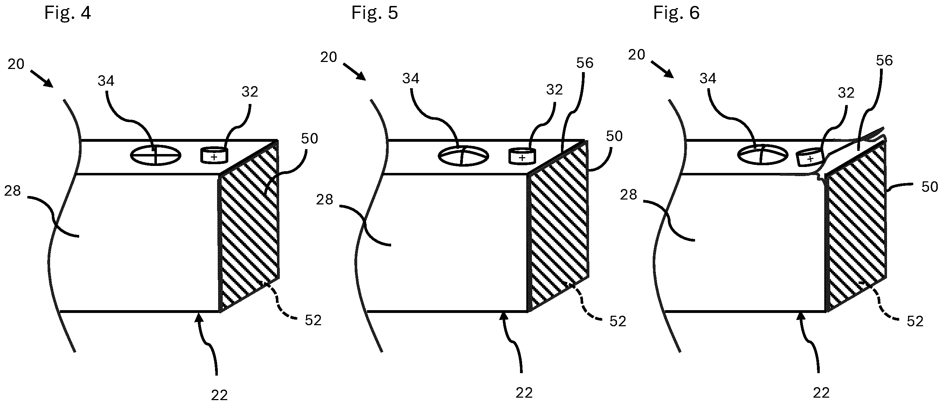

Fig. 4 shows an exemplary embodiment of a battery arrangement 20 comprising the first battery cell 22 having the same elements as the first battery cell 22 of Figs. 1-3. Further, the battery arrangement 20 comprises a planar stiffening element 50 that is surface-mounted to a stiffening section 52 of the first casing 28. Thus, the stiffening section 52 corresponds to the side-wall 2 of the first casing 28. The planar stiffening element 50 is planarly and externally surface-mounted to the stiffening section 52, i.e., from the outside which means on a surface of the stiffening section 52 that faces outwards, and such that the surface of the planar stiffening element 50 extends along the surface of the stiffening section 52.

The planar stiffening element 50 may have a higher stiffness or Young's modulus than the stiffening section 52 and may be attached to the stiffening section 52 by gluing. Consequently, the planar stiffening element 50 increases the stiffness of the stiffening section 52. In other words, the stiffness of the arrangement or the sandwich-structure of the planar stiffening element 50 and the stiffening section 52 is higher than the stiffness of the first casing 28 at the stiffening section 52 without the stiffening element 50. Thus, the deformability of the first casing 28 within the stiffening section 52 is lower than in other parts or sections of the first casing 28, which creates an anisotropy or inhomogeneity of the deformability in the first casing 28.

Fig. 5 shows the effect of the increased stiffness in the stiffening section 52 in the event of an increased pressure within the first battery cell 22. Due to the increasing pressure the first burst disc 34 may bend outwards, as in case of the first battery cell 22 of Fig. 2 without the planar stiffening element 50. However, due to the surface-mounted planar stiffening element 50 the stiffening section 52 is not deformed despite the increase of pressure inside the first battery cell 22. As an effect of this increased stiffness in the stiffening section 52 the stress or load on the first casing 28 is increased in a non-contact section 56 of the first casing 28 which is adjacent to the stiffening section 52. The anisotropy of the deformation behavior of the first casing 28, i.e. the lack of a uniform deformation behavior, creates at least one weak spot in the non-contact section 56 in which the stress on the material due to the increasing pressure is higher than in other sections of the first casing 28, and, in particular, than in the stiffening section 52 and at the optional first burst disc 34.

Fig. 6 shows the effect of this in the event of the overpressure. The first casing 28 breaks open first in the non-contact section 56, i.e., before other sections of the first casing 28 break open or rupture and even before the burst disc 28 bursts. Thus, the pressure and any vent jet of hot active material is released through the opening created in the non-contact section 56 instead of the first burst disc 34. In other words, the venting behavior of the first battery cell 22 has retroactively been modified by altering the location at which any potential vent jet occurs in the event of the overpressure. In this manner, any potential vent jet that may damage neighboring battery cells or other structures may be redirected into a direction that results in less or no damage by the vent jet. As discussed above, the occurrence and location of the weak spots in the non-contact section may be previously determined based on known material properties and shapes of the first casing 28 and the planar stiffening element 50 by calculation, computation, simulation, or empirically.

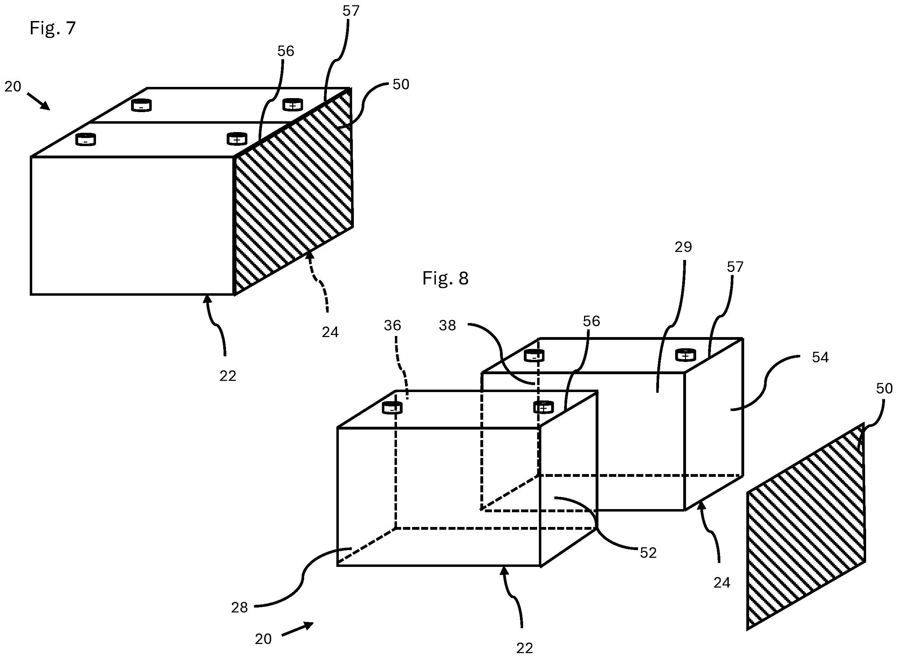

Fig. 7 shows an embodiment of the battery arrangement 20 having two battery cells 22, 24 namely the first battery cell 22 having the first casing 28 and a second battery cell 24 having a second casing 29. The two battery cells 22, 24 are arranged next to each other in a battery stack. As can be taken from Fig. 8 showing an exploded view of the battery arrangement 20 of Fig. 7, the first battery cell 22 is a cuboid having six side-walls 2 and the second battery cell 24 is a cuboid also having six side-walls. The battery cells 22, 24 in Fig. 7 have no first burst disc 34. However, each of the two battery cells 22, 24 may optionally have a burst disk 34. On the other side, the embodiments shown in Fig. 4 to 6, and 9 each have burst discs 34, 35, 33, which however, are only optional, i.e., the embodiments shown in Figs. 4 to 6, and 9 may not have any burst disk 34, 35, 33.

A first contact section 36 of the first battery cell 22 touches a second contact section 38 of the second battery cell 24. The planar stiffening element 50 is surface-mounted by being attached to the first stiffening portion 52 of the first battery cell 22 and a second stiffening portion 54 of the second battery cell 24 by one of the previously described attachment methods. As in the case of the single battery cell, the effect of the planar stiffening element is to determine a non-contact section of the respective battery cell casing which breaks open first in case of the overpressure inside the respective battery cell. In the event of the overpressure within the first battery cell 22, the first casing 28 breaks open in the first non-contact section 56. In the event of the overpressure within the second battery cell 24, the second casing 29 breaks open in the second non-contact section 57. The location of the first non-contact section 56 and of the second non-contact section 57 is determined such, that in the event of a vent jet ejected by any of the first battery cell 22 or the second battery cell 24, the direction of the vent j et(s) is such that the respective other battery cell or any other surrounding structure is not, or at least as little as possible, damaged by the vent jet. The planar stiffening element 50 may be a one-piece element, e.g., a single element bent accordingly at the edges of the battery arrangement 20, or be composed of several individual elements, e.g., one element for each outwardly facing lateral side-wall of the battery arrangement 20.

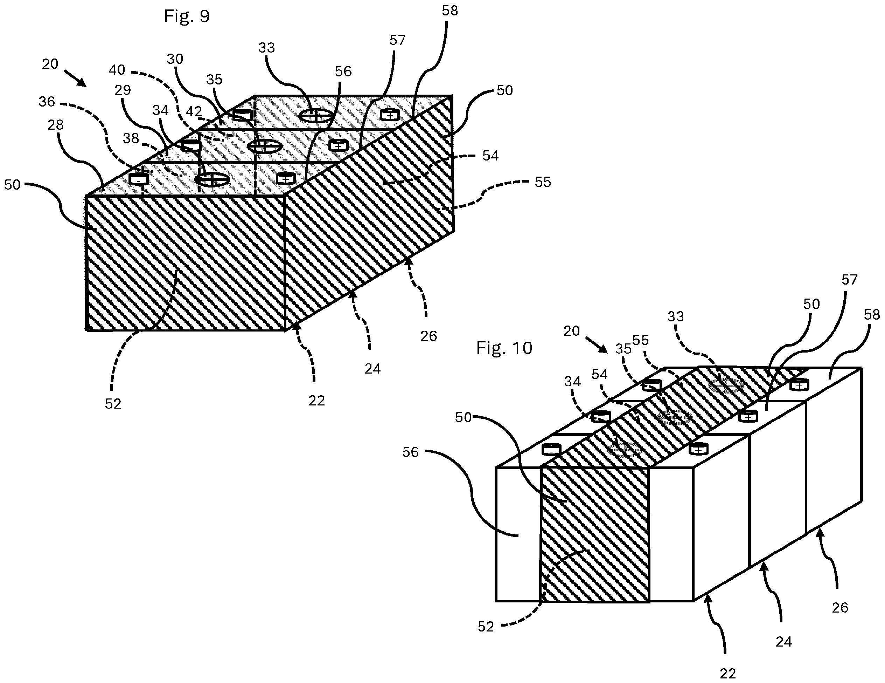

Fig. 9 shows an embodiment of the battery arrangement 20 having three battery cells, a first battery cell 22, a second battery cell 24 and a further battery cell 26 optionally having the first burst disc 34, a second burst disc 35, and a further burst disc 33, respectively, and the first casing 28, the second casing 29, and a further casing 30, respectively. The first casing 28 has one contact section 36 touching the second contact section 38 of the second casing 29. The further casing 30 of the further battery cell 26 has one further contact section 42 touching a third contact section 40 of the second casing 29. The planar stiffening element 50 is surface-mounted to those outwardly facing lateral side-walls of the first, second and further casings 28, 29, 30 such that the planar stiffening element 50 surrounds the battery arrangement 20 laterally. Thus, the first stiffening section 52 consists of the three outwardly facing lateral side-walls of the first casing 28, the second stiffening section 54 consists of the two outwardly facing lateral side-walls of the second casing 29, and the further stiffening section 55 consists of the three outwardly facing lateral side-walls of the further casing 30.

As in the case of the single battery cell or of two battery cells, the effect of the planar stiffening element is to define a non-contact section of the respective battery cell casing which breaks open first in case of the overpressure inside the respective battery cell, i.e., even before any of the first, second, or further burst discs 33, 34, 35 bursts. In the event of the overpressure within the first battery cell 22, the first casing 28 breaks open in the first non-contact section 56. In the event of the overpressure within the second battery cell 24, the second casing 29 breaks open in the second non-contact section 57. In the event of the overpressure within the further battery cell 26, the further casing 30 breaks open in the further non-contact section 58. The location of the first non-contact section 56, the second non-contact section 57 and the further non-contact section 58 is determined such, that in the event of a vent jet ejected by any of the first battery cell 22, second battery cell 24, or further battery cell 26 the direction of the vent jet(s) is such that the respective other battery or any other surrounding structure is not, or at least as little as possible damaged by the vent jet. The planar stiffening element 50 may be a one-piece element, e.g., a single element bent accordingly at the edges of the battery arrangement 20, or be composed of several individual elements, e.g., one for each outwardly facing lateral side-wall of the battery arrangement 20.

Fig. 10 shows and embodiment in which the battery arrangement 20 comprises three battery cells 22, 24, 26. What has been discussed in context of Fig. 9 applies here as well. The only difference is that the planar stiffening element 50 is surface-mounted such that is covers the first burst disc 34, the second burst disc 35, and the further burst disc 33.

Thus, the arrangement of the planar stiffening element 50 increases the threshold pressure at which the burst discs 34, 35, 33 will burst in the event of the overpressure in any of the battery cells 22, 24, 26. In this way it can be ensured that the first casing 28, the second casing 29 and the further casing 30 break open first at the first non-connection section 56, the second non-connection section 57 or the further non-connection section 58, i.e., before the burst discs 34, 35, 33 in the event of the overpressure in the first battery cell 22, the second battery cell 24 or the further battery cell 26 respectively. In other words, by such an arrangement of the planar stiffening element 50 the function of the burst discs 34, 35, 33 can be delayed or deactivated. This concept has been exemplarily shown for the case of a battery arrangement 20 with three battery cells 22, 24, 26. However, it can be applied to any other number of battery cells, e.g. one, two or more than three battery cells.

In the above embodiment, the first, second and further stiffening sections 52, 54, 55 may be first subsections of at least one side-wall of the first, second and further casings 28, 29, 30, while the first, second and further non-contact sections 56, 57, 58 may be second subsections of the same at least one side-wall of the first, second and further casings 28, 29, 30 which are different from the first subsections. In other words, the same side-wall of a battery cell 22, 24, 26 may comprise at least a part of the stiffening section 52, 54, 55 and at least a part of the non-contact section 56, 57, 58. Although not shown in Figures 4 to 9, this alternative arrangement of the stiffening sections 52, 54, 55 and the non-contact sections 56, 57, 58 that correspond to subsections of one or more of the side-walls of the respective casing 28, 29, 30 may also apply as an optional modification of the other embodiments discussed herein and, in particular, in the context of Figures 4 to 9.

For example, the first stiffening section 52 may be a first sub-section of a first one of the side-walls 2 of the casing 28, and the first non-contact section 54 may be a second sub-section of the same side-wall 2, which is different from the first sub-section. In particular, the first stiffening section may correspond to the first sub-section of the above side-wall 2 which is covered by the planar stiffening element 50, and the first non-contact section 52 may correspond to the second sub-section of the same side-wall 2 that is not covered by the planar stiffening element 50. The planar stiffening element 50 may be surface-mounted to the first stiffening portion 52 by attaching at least a portion of a surface of the planar stiffening element 50 to a facing surface of the first stiffening portion 52 (e.g., using one of the attachment methods described above). The same applies, mutatis mutandis, to the cases of having the second battery cell 24 and further battery cells 26.

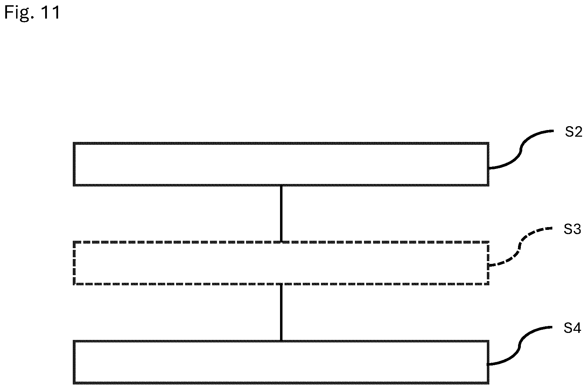

Fig. 11 shows flowchart of a method according to an embodiment of the invention.

In a step S2, a first battery cell 22 having a first casing 28 is provided. The step S2 of surface-mounting the planar stiffening element 50, may comprise at least one of attaching the planar stiffening element 50 to the first stiffening section 52 by gluing, bonding, welding, fusing or vulcanizing.

In step S2, alternatively a second battery cell 24 having a second casing 29 and/or further battery cells 26 each having a further casing 30 may be provided.

In step S4 the planar stiffening element 50 is then surface-mounted to a second stiffening section 54 of the second casing 29 and/or to a further stiffening section 55 of the further casings 30. Alternatively to surface-mounting the planar stiffening element 50 to all provided stiffening sections 52, 54, 55, steps S2 may comprise to surface-mount the planar stiffening element 50 to the first, second and/or further stiffening sections 52, 54, 55 by attaching it to the first stiffening section 52 and additionally to only one or some of the second and further stiffening sections 54, 55.

Step S2 may comprise surface-mounting the planar stiffening element 50 such that it covers any burst disc 34, 35, 33 comprised by any of the battery cells 22, 24, 26. Thus, the stiffening sections 52, 54, 55 may be chosen such, that they comprise any present burst disc 34, 35, 33. This approach of covering bust disks 34, 35, 33 applies to any number of battery cells in the battery arrangement 20, i.e., to only one battery cell, and to two or more battery cells.

In an optional step S3, a first non-contact section 56 may be determined according to one of the methods discussed earlier, e.g., by computation, calculation, simulation, or empirically, such that in the event of the overpressure within the first battery cell 22 the first casing 28 will break open in the first non-contact section 52 first.

Optional step S3 may comprise determining at least one of the position, the shape, the material, the thickness and the method of attachment of the planar stiffening element 50. This may, as well be done by or as a result of computation, calculation, simulation, or empirically. The position and shape of the planar stiffening element 50 may determine the first stiffening section 52.

In a step S4, a planar stiffening element 50 is externally surface-mounted to a first stiffening section 52 of the first casing 28 by any of the above discussed methods of attachment. The planar stiffening element 50 is surface-mounted such that it covers the first stiffening section 52. Preferably, all the surface of the planar stiffening element 50 is non-removably attached to the first stiffening section 52. Nevertheless, not all the surface of the planar stiffening element 50 has to be non-removably attached to the first stiffening section 52. Rather, while covering the first stiffening section 52 only a part of the two surfaces may be non-removably attached to each other by any of the above discussed methods of attachment.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 2: side-wall of cuboid
- 20: battery arrangement
- 22: first battery cell
- 24: second battery cell
- 26: further battery cell
- 28: first casing
- 29: second casing
- 30: further casing
- 32: electrode
- 34: first burst disk
- 35: second burst disk
- 33: further burst disk
- 36: first contact section
- 38: second contact section
- 40: third contact section
- 42: further contact section
- 50: planar stiffening element
- 52: first stiffening section
- 54: second stiffening section
- 55: further stiffening section
- 56: first non-contact section
- 57: second non-contact section
- 58: further non-contact section
- S2 and S4: method steps one and two

## Claims

1. A battery arrangement (20) comprising
a first battery cell (22) having a first casing (28); and
a planar stiffening element (50) which is externally surface-mounted to a first stiffening section (52) of the first casing (28) in such a way that the planar stiffening element (50) completely covers the first stiffening section (52);
wherein the planar stiffening element (50) is formed and surface-mounted to the first non-contact section (52) such that it increases the stiffness of the first stiffening section (52) such that when a pressure within the first battery cell (22) increases beyond a predefined first threshold pressure, the first casing (28) breaks open first in a predetermined first non-contact section (56) of the first casing (28), which is different from the first stiffening section (52), in order to allow the pressure within the first battery cell (22) to be decreased.

2. The battery arrangement according to claim 1, wherein
the first stiffening section (52) and first non-contact section (56) are arranged next to each other.

3. The battery arrangement (20) according to one of the preceding claims, wherein
the casing of the first battery cell (22) comprises a pressure relief valve (34) for releasing the pressure within the first battery cell (22) when the pressure increases beyond a predefined second threshold pressure, and
the planar stiffening element (50) is configured and surface-mounted to the first stiffening section (52) such that the first threshold pressure is lower than the second threshold pressure.

4. The battery arrangement (20) according to claim 3, wherein
the pressure relief valve (34) is arranged in the first stiffening section (52) and
the planar stiffening element (50) is surface-mounted to first stiffening section (52) such that it blocks the pressure relief valve (34).

5. The battery arrangement (20) according to any one of the preceding claims, wherein
the surface-mounted planar stiffening element (50) is attached to the first stiffening section (52) by at least one of gluing, bonding, welding, brazing, fusing or vulcanizing.

6. The battery arrangement (20) according to any one of the preceding claims, wherein
the surface-mounted planar stiffening element (50) is attached to the first stiffening section (52) over at least 50%, at least 70%, at least 80%, at least 90%, or 100% of the complete first stiffening section (52) and the complete planar stiffening element (50) facing the surface of the first stiffening section (52).

7. The battery arrangement (20) according to any one of the preceding claims, wherein
the first stiffening section (52) covers one of 5%, 8%, 15%, 25%, 33%, 50%, 75% or 90% of a net surface of the first casing (28).

8. The battery arrangement (20) according to any one of the preceding claims, wherein
the planar stiffening element (50) increases the stiffness of the first stiffening section (52) by comprising or consisting of
a material having Young's modulus being the same or higher than the Young's modulus of the material of the first casing (28), and/or
a material having Young's modulus of one of 50 GPa to 400 GPa, e.g., 60 GPa to 300 GPa, e.g., 100 GPa to 250GPa, and/or
a material of one of, of steel, aluminum, titanium metals, polymers, fiber reinforced polymers, or other composite materials.

9. The battery arrangement (20) according to any one of the preceding claims, wherein
the planar stiffening element (50) increases the stiffness of the first stiffening section (52) by having a thickness
of one of 0.1 mm to 50 mm, 0.5 mm to 10 mm, or 1 mm to 3 mm and/or
of one of 0.1 times to 10 times, 0.5 times to 4 times, or 1 times to 3 times of the thickness of the first casing (28) in the first stiffening section (52).

10. The battery arrangement (20) according to any one of the preceding claims, wherein
the planar stiffening element (50) increases the stiffness of the first stiffening section (52) by having a surface shape of one of a rectangle, a circle, an oval, a hexagon or any shape that allows coverage of the surface of the first stiffening section.

11. The battery arrangement (20) according to any of the preceding claims, wherein
the first battery cell (22) is cuboidal and has six side-walls (2),
the first stiffening section (52) is a first one of the six side-walls (2), and
the first non-contact section (56) is on an edge between the first one and a further one of the six sidewalls (2), or on the further one of the six side-walls (2), wherein the further one of the six side-walls (2) is different from the first one of the six side-walls (2).

12. The battery arrangement (20) according to any one of the preceding claims, further comprising
a second battery cell (24) having a second casing (29), wherein
a first contact section (36) of the first casing (28), which is different from the first stiffening section (52) and the first non-contact section (56), touches a second contact section (38) of the second casing (29), which is different from a second stiffening section (54) and a predetermined second non-contact section (57) of the second casing (29),
the planar stiffening element (50) is externally surface-mounted to the second stiffening section (54), in such a way that the planar stiffening element (50) completely covers the second stiffening section (54); and
the planar stiffening element (50) is formed and surface-mounted to the second stiffening section (54) such that it increases the stiffness of the second stiffening section (54) such that when a pressure within the second battery cell (24) increases beyond the predefined first threshold pressure, the second casing (29) breaks open first in the predetermined second non-contact section (57), in order to allow the pressure within the second battery cell (24) to be decreased.

13. A method of manufacturing a battery arrangement comprising:
providing (S2) a first battery cell (22) having a first casing (28);
surface-mounting (S4) a planar stiffening element (50) externally to a first stiffening section (52) of the first casing (28) such that the planar stiffening element (50) completely covers the first stiffening section (52), wherein
the planar stiffening element (50) is formed and surface-mounted to the first stiffening section (52) such that it increases the stiffness of the first stiffening section (52) such that when a pressure within the first battery cell (22) increases beyond a predefined first threshold pressure, the first casing (28) breaks open first in a predetermined first non-contact section (56) of the first casing (28), which is different from the first stiffening section (52), in order to allow the pressure within the first battery cell (22) to be released.

14. The method according to claim 13, wherein
surface-mounting (S4) the planar stiffening element (50) externally to the first stiffening section (52) comprises attaching the planar stiffening element (50) externally to the first stiffening section (52) by at least one of gluing, bonding, welding, brazing, fusing or vulcanizing.

15. The method according to claim 13 or 14, wherein
the first battery cell (22) is provided together with a second battery cell (24) having a second casing (29),
the step of surface-mounting the planar stiffening element (50) externally to the first stiffening section (52) further comprises surface-mounting the planar stiffening element (50) externally to a second stiffening section (54) of the second casing (29), and
the planar stiffening element (50) is formed and surface-mounted to the second stiffening section (54) such that it increases the stiffness of the stiffening section (54) such that when a pressure within the second battery cell (24) increases beyond a predefined first threshold pressure, the second casing (29) breaks open first in a predetermined second non-contact section (57) of the second casing (29), which is different from the second stiffening section (54), in order to allow the pressure within the second battery cell (24) to be released.
